# EUROPEAN PATENT SPECIFICATION

(11) **EP 0 629 902 B1**
(45) Date of publication and mention of the grant of the patent: **08.04.1998**
(21) Application number: 94108953.4
(22) Date of filing: 10.06.1994
(51) Int. Cl.: G03B 27/62, G03D 13/00

(54) **Continuous film feed device and method therefor**
Verfahren und Vorrichtung einer Endlosfilmzuführung
Procédé et dispositif d'alimentation en film continu

(30) Priority: 15.06.1993 JP 143690/93; 30.03.1994 JP 60568/94
(43) Date of publication of application: 21.12.1994
(73) Proprietor: NORITSU KOKI CO., LTD., Wakayama-shi, Wakayama (JP)
(72) Inventor: Kishi, Takuji, Wakayama-shi, Wakayama (JP); Murakami, Motoaki, Wakayama-shi, Wakayama (JP); Ohtani, Kimiharu, Wakayama-shi, Wakayama (JP)
(74) Representative: Grünecker, Kinkeldey, Stockmair & Schwanhäusser Anwaltssozietät

(56) References cited:
- EP-A- 0 357 355
- DE-A- 3 206 251
- US-A- 4 411 725
- US-A- 4 798 375
- US-A- 4 847 635

## Description

This invention relates to a method of continuously feeding films according to the preamble of claim 1, and a continuous film feeding device according to the preamble of claim 5.

A method and a device of this type are disclosed in US-A-4 411 725. The known film feeding device discloses a magazine, including a case and a film core supported therein. The case is adapted to receive a plurality of films wound on the core, one above the other, with the leading end of the film spliced by means of adhesive tapes to the trailing end of the foregoing film wound onto the core immediately before. The magazine is then inserted into a printer, and the films are then fed to a printing/exposure stage.

In a further method used for feeding films to a printer, the plurality of films are fed in separate rolls contained in separate cartridges as received from the user.

It is further known from US-A-4 847 635 to store a plurality of large copy sheets wound on a supply roll in an interleaved or overlapping array with the leading end of each sheet overlapping the trailing end of the sheet immediately wound before that sheet onto a roll. The roll is driven by a motor until the outermost end of the uppermost sheet separates from the roll, and is detected by sensing means. Then rotation of the roll is stopped, and the outermost sheet is pulled from the roll, releasing the outermost end of the next sheet, which then will move down into a tangent arrangement to the roll for being detected by the sensing means.

Either of the above-described methods of continuously feeding films has a problem in that the number of films which can be set is limited in view of the mounting position and the like.

It is not only-troublesome to mount cartridges each accommodating one film or to splice a plurality of films together and then separate them from one another. This will also complicate the structure of the continuous film feed device.

It is an object of this invention to provide a method of, and a device for continuously feeding a plurality of films wound in a case with their ends overlapped without any of the abovesaid problems.

It is another object of this invention to provide a continuous film feed device which can keep in position the film leading end simply by closing the lid of the case, whereby holding the film leading end in position reliably, safely and at low cost.

As means to solve the above objects, there is provided, according to claim 1, a method of continuously feeding films comprising the steps of winding a plurality of films one after another around a film core rotatably supported in a case, with the ends of the adjacent films overlapped by putting the leading end of each film under the tail end of the preceding film wound immediately before the each film, and feeding the films continuously by pulling out each film while pressing the overlapped ends toward the center of the core.

As a device for embodying the above-mentioned method of the invention, there is provided according to claim 5 a continuous film feeding device comprising a case having a lid which can be opened, a film core rotatably supported in the case, a film presser means provided around the film core and comprising rollers for pressing against the film core the films wound around the film core with the leading end of each film slid under the tail end of the preceding film, the case being formed with an outlet through which the films are pulled out, a feed roller provided outside the case near the outlet, and a mating roller provided inside the case and opposite to the feed roller for feeding the films in cooperation with the feed roller.

In order to avoid that the leading end in the pulling direction of the outermost film may retract in the feed device when detaching the film feed device from the photographic printing apparatus, this device is preferably designed according to claim 6, such that the mating roller has a shaft urged by an elastic member so as to be movable, wherein an opening for receiving the feed roller is formed near the mating roller, and wherein the inner surface of the lid at a portion between the feed roller and the mating roller is formed as a presser for pressing the films fed therebetween.

The films are wound around the core with their ends overlapped without splicing them together. The films thus wound are fed continuously. When winding films, the leading end of each film is slid under the tail end of the preceding film. Since the overlapped portions thus formed are pressed by rollers at all times, they can be fed continuously without the need of splicing their ends.

Since the films are pressed by rollers toward the center of the core while being wound, they are reliably wound around the core. The feeding device has a feed roller and a mating roller provided opposite to each other. Films are fed continuously by these rollers.

The mating roller is supported by an elastic member so that its axis is movable, an opening for receiving the feed roller is formed near the mating roller, and the inner surface of the lid at a portion between the feed roller and the mating roller is formed as a presser for pressing films. With this arrangement, while the feed roller and the mating roller are in engagement with each other, their contact portion, where the film is sandwiched, is located inwardly of the inner surface of the lid plate of the case. While not in use, the film leading end is held between the inner surface of the lid and the mating roller.

With the continuous film feeding method according to the present invention, a plurality of films are wound around the core with their ends overlapped so that they can be fed one by one continuously. Thus, unlike conventional arrangements, there is no need to set cartridges of films or to splice a plurality of films together with tapes. This makes it possible to continuously and automatically feed a plurality of films.

Other features and objects of the present invention will become apparent from the following description of preferred embodiments made with reference to the accompanying drawings, in which:
Fig. 1 is a perspective view showing the inner structure of the continuous film feed device of the first embodiment;
Fig. 2 is a vertical sectional view of the same;
Figs. 3A and 3B are sectional views taken along lines A-A and B-B of Fig. 2;
Fig. 4 is a view showing how the films are wound;
Fig. 5 is a front view of the photographic printing apparatus;
Fig. 6 is a view showing how the film is fed in the same;
Fig. 7 is a perspective view showing the inner structure of the second embodiment;
Fig. 8 is a vertical sectional view of the embodiment of Fig. 7;
Figs. 9A and 9B are sectional views taken along lines A-A and B-B of Fig. 8;
Fig. 10 is a view showing how the films are wound;
Fig. 11A is an enlarged sectional view showing the area near the feed rollers and Fig. 11B is a sectional view taken along line B-B of Fig. 11A; and
Fig. 12A is an enlarged sectional view showing the area near the mating rollers and Fig. 12B is a sectional view taken along line B-B of Fig. 12A.

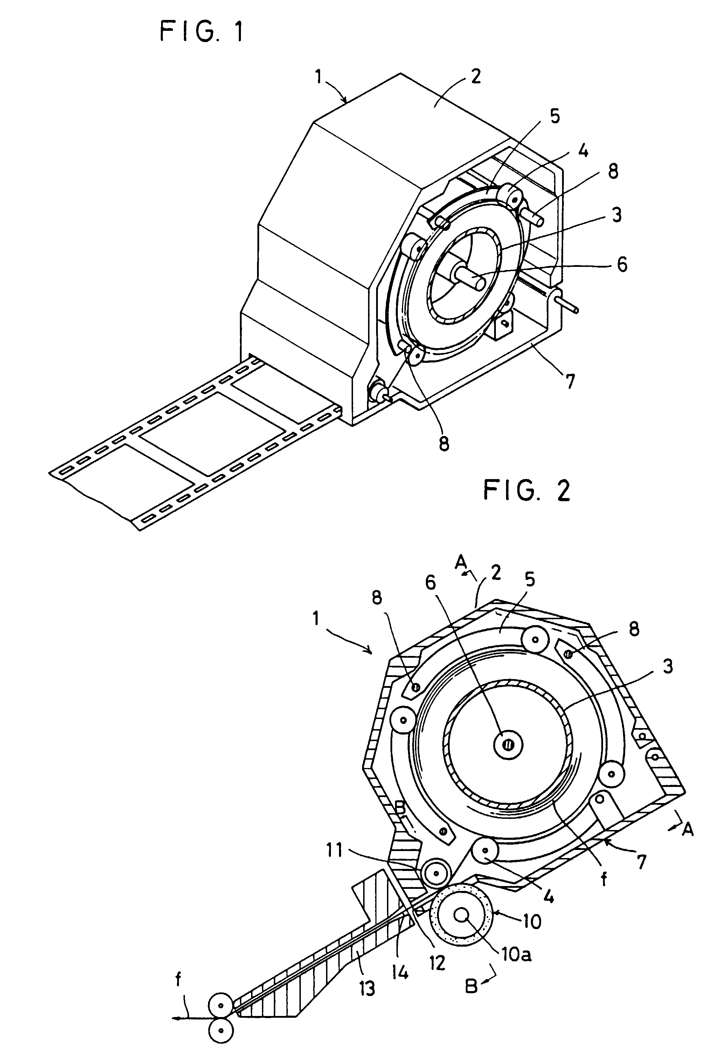

Fig. 1 is an outer perspective view showing the inner structure of a continuous film feed device in one embodiment. In this figure, the side cover is removed to show the inner structure of the device.

This continuous film feed device 1 comprises a case 2, a film take-up core 3 rotatably mounted in the case 2, and a plurality (four in the embodiment) of roller support arms 5 each having a film presser roller 4 for pressing the film toward the center of the core 3. The film take-up core 3 is supported on a rotary shaft 6. Numeral 7 designates a lid of the case 2.

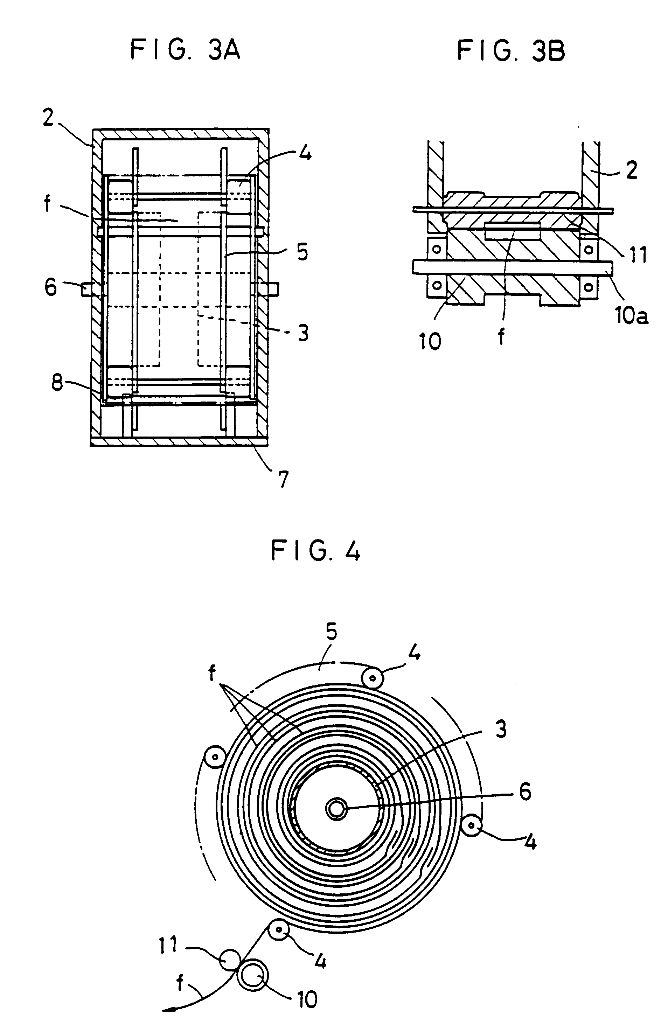

Fig. 2 shows a side view of the continuous film feed device. Shown in Figs. 3A and 3B are sectional views taken along lines A-A and B-B of Fig. 2, respectively.

The roller support arms 5 are supported on respective support shafts 8 and biased by springs (not shown) so that their tips are urged lightly toward the center of the film take-up core 3 to press the film toward its center at all times. The springs may be coil springs provided around the support shafts 8 or leaf springs having a suitable shape and provided along the respective roller support arms 5.

At one corner of the case 2 are provided a pair of rollers comprising a feed roller 10 for feeding a film which is provided outside the case 2 and a mating roller 11 provided inside the case 2. Film is fed out through a film outlet 12 formed in one end of the case 2. The feed roller 10 is a one-way roller. If the film being fed is pulled with a torque higher than a predetermined value, the feed roller 10 will go idle. When the pulling force disappears, the film is fed by the feed roller 10. In front of the film outlet 12 is provided a film guide 13 through which the film is fed in a desired direction.

The feed roller 10 as the driving roller for film has its shaft 10a connected to and driven by a driving source such as a motor. The lid 7 is hinged to the case at its right end and can be opened and closed manually.

The continuous film feed device 1 of this embodiment is used as follows:

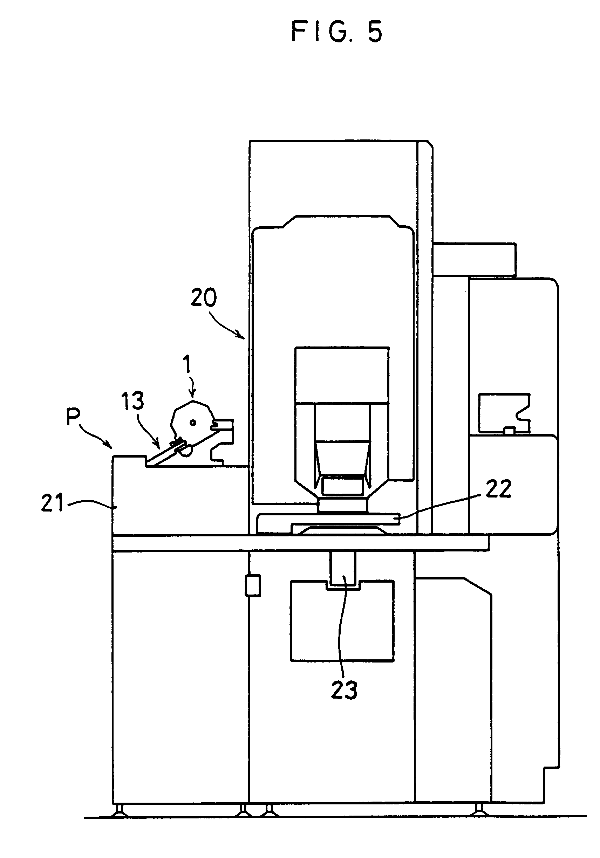

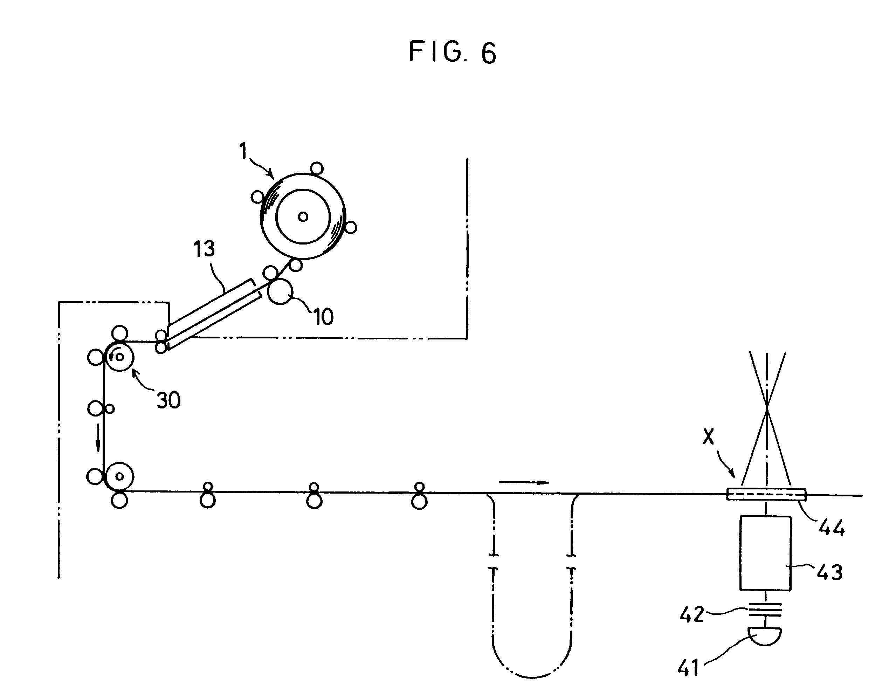

As shown in Figs. 5 and 6, the continuous film feed device 1 is mounted on a photographic printing apparatus 20 near its film infeed portion P, together with the film guide 13 or with the film guide 13 coupled to the device 1 beforehand. Numerals 22 and 23 designate an automatic negative mask and a mirror tunnel, respectively.

Mounted in the photographic printing apparatus 20 is a carrier device 30 comprising a plurality of rollers as shown in Fig. 6. Films f fed from the continuous film feed device 1 are sent to the printing/exposure stage X by the carrier device 30 for printing and exposure. But since this portion is not directly related to the present invention, its detailed description is omitted. In the figure, numeral 41 is a light source; 42 is a light-adjusting filter; 43 is a mirror tunnel; and 44 is a negative mask.

A plurality of (e.g. 5-10) films f are wound onto the film feed device 1 with their ends (where there are no picture frames) overlapped as shown in Fig. 4. Since films are extremely thin, the diameter of the roll of films will not increase so much even when they are wound with their ends overlapped.

The overlapped portions are formed by sliding the leading end of each film under the end of the last wound film. Since the overlapped portions are always pressed by the film presser rollers 4, the films are fed continuously.

When winding films on the continuous film feed device 1, after opening the lid 7 of the case 2, films are wound one after another so that their ends overlap with each other as described above.

When feeding films f, the leading end of the topmost film is set between the feed roller 10 and its mating roller 11 beforehand. In this state, by driving the feed roller 10 through its rotary shaft 10a, the films are fed.

When each film is fed into the photographic printing apparatus 20, it is pulled in at high speed by a high-speed roller 30 (Fig. 6) provided near the inlet of the photographic printing apparatus. Thereafter, the feed roller 10 in the continuous film feed device will idle. When the overlapped portion of the films moves past the feed roller 10, the pressure on the overlapped portion is released. The film is thus separated from the subsequent films.

When the feed roller 10 begins idling, transmission of the driving force to the feed roller 10 will stop. Thus, the moment the preceding film f is separated, the feed roller 10 will stop rotating and be kept in this position with the leading end of the subsequent film sandwiched between the feed roller 10 and its mating roller 11.

Each film is thus fed into the photographic printing apparatus 20. After a predetermined interval, the feed roller 10 is reactivated to feed the next film into it.

With this arrangement, when winding a plurality of films in the continuous film feed device 1, there is no need to splice them. Films can be fed continuously without the need for any film connecting means.

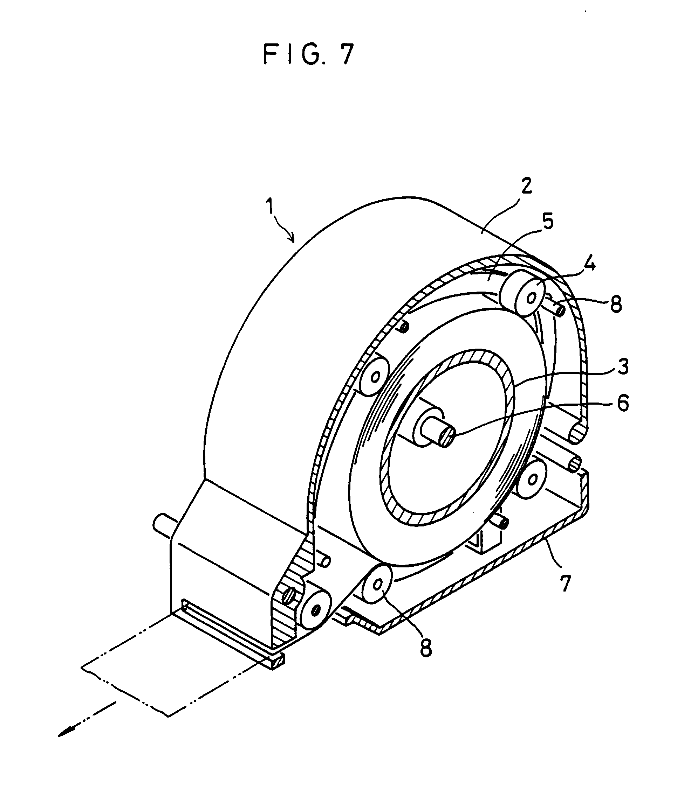

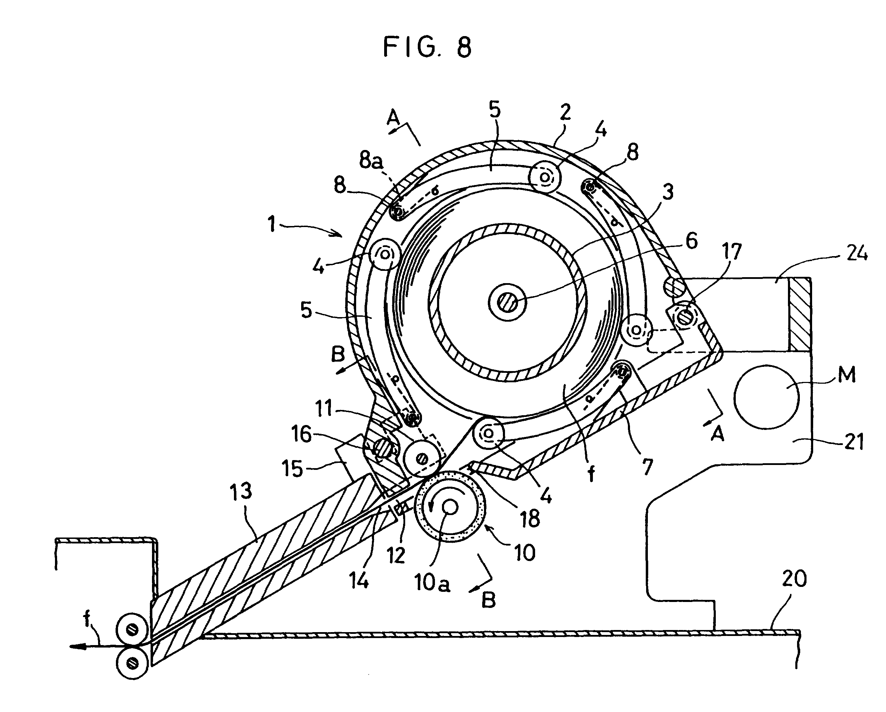

Fig. 7 is a perspective view of the continuous film feed device of another embodiment, and Fig. 8 is its sectional view. Basically, this embodiment is the same in structure as the first embodiment but differs therefrom mainly in its outer shape, in that it can be mounted on a mounting base and that it is provided with a film end presser mechanism that utilizes the lid of the case. The same elements as those in the first embodiment are denoted by the same numerals.

In this embodiment, the case 2 has a semicircular outer configuration. A mounting base 21 is provided on the top surface of the case of the photographic printing apparatus 20. The case 2 of the continuous film feed device 1 is detachably and obliquely mounted on the mounting base 21 together with the film guide 13. The mounting base 21 is a substantially triangular, vertical plate as shown. The case 2 is mounted on the front side of the vertical plate, while a driving motor M for driving the feed roller 10 is mounted on the opposite side.

A mounting seat 15 is provided at the end of the film guide 13, while another mounting seat 24 is provided on top of the mounting base 21. Mounting seats 15 and 24 have recesses in which are received mounting pins 16 and 17 that support the case 2. Though not shown, means are provided for preventing the mounting pins 16, 17 from coming out.

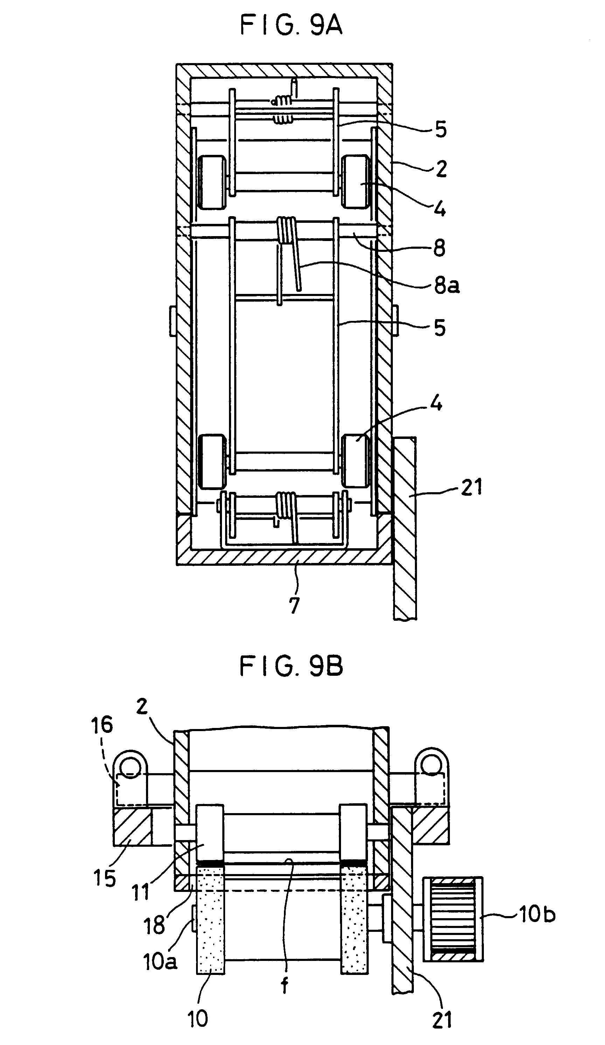

Figs. 9A and 9B show sectional views taken along lines A-A and B-B of Fig. 8, respectively. Feed rollers 10 are mounted in a cantilever fashion through its rotary shaft 10a extending through the mounting base 21. A timing belt 10b is put around the rotary shaft 10a at its other end. The timing belt 10b is also in engagement with the driving motor M shown in Fig. 8.

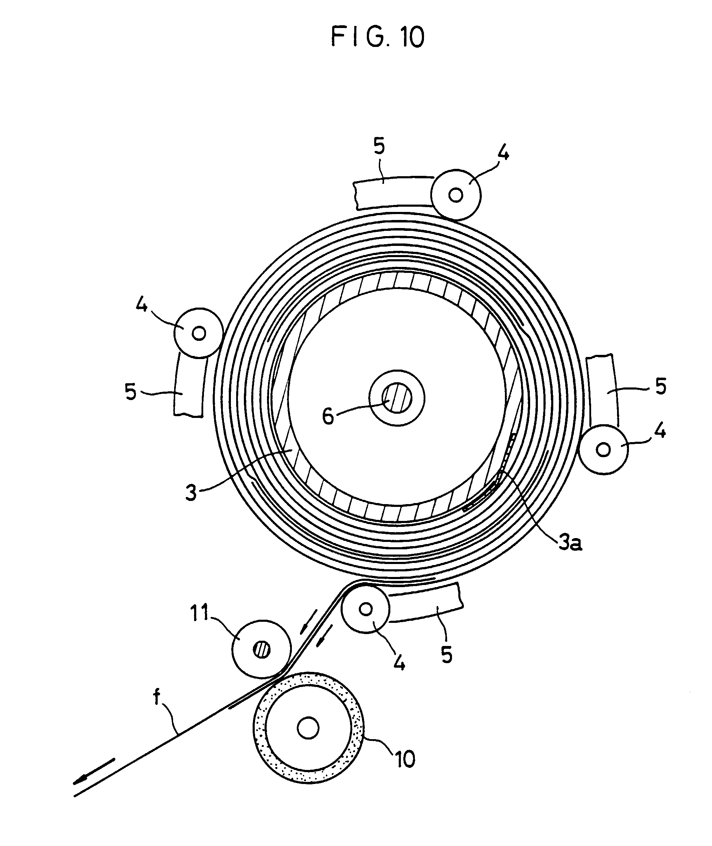

Fig. 10 corresponds to Fig. 4 and illustrates how the films are fed. As will be apparent from the figure, films are wound with their ends overlapped without splicing as with the first embodiment. Namely, the leading end of each film is slid under the tail end of the preceding film. The length of overlapping portion between the adjacent films has to be longer than the distance between the film presser roller 4 and the feed roller 10.

In this embodiment, the film take-up core 3 has a film leading end presser member 3a whereby the trailing end of the first or innermost film can be reliably fastened to the core 3. Presser member 3a is made of a spring material. When all the films are unrolled completely, its tip will spring up slightly from the surface of the core 3. A new film is inserted into the space between the presser member 3a and the core 3 and wound around the core.

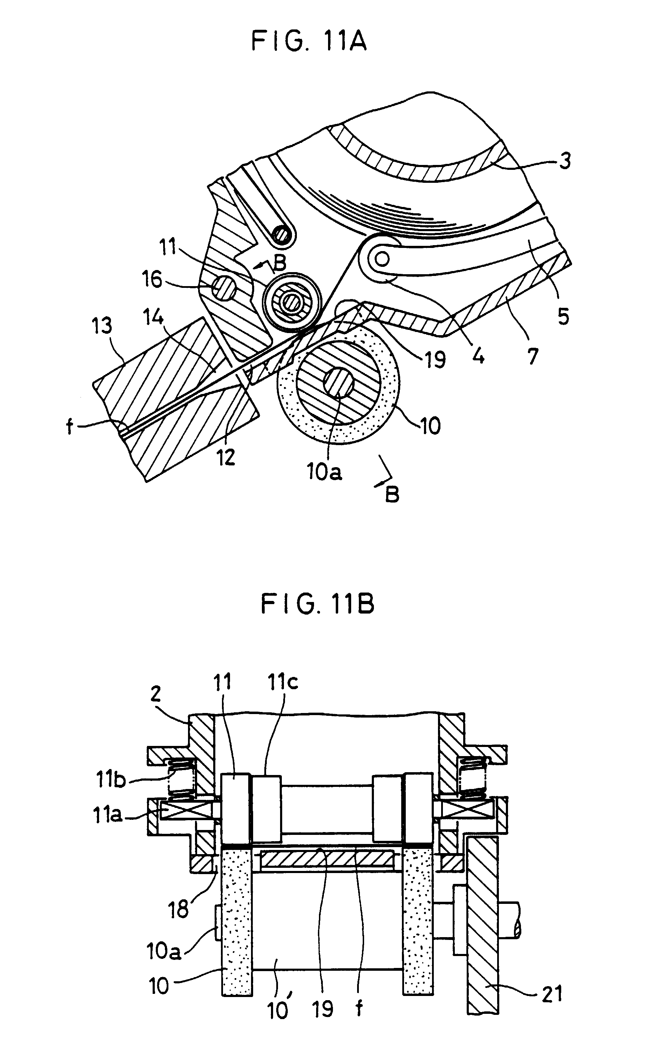

Fig. 11A is a partial enlarged view showing one feed roller 10 and its vicinity. Fig. 11B is a sectional view taken along line B-B of Fig. 11A. As shown, feed rollers 10 are provided at both ends of a drum 10' and larger in diameter than the drum. The lid 7 is formed with openings 18 that are wide enough to receive rollers 10. Thus, the other portion of the lid 7 protrudes inwardly from the inner surface of the lid 7 as a film presser 19.

Mating rollers 11 are mounted on a rotary shaft which carries at its protruding ends spring bearings 11a which are resiliently supported by coil springs 11b provided at both sides of the case 2.

Thus, as shown in Fig. 11A, with the case 2 of the continuous film feed device 1 mounted on the mounting base 21, feed rollers 10 are received in the respective openings and partially protrude inwards, thus pressing the mating rollers 11. The contact surfaces between both rollers are thus located inwardly of the inner surface of the lid 7 of the case 2. Films f are fed in this state.

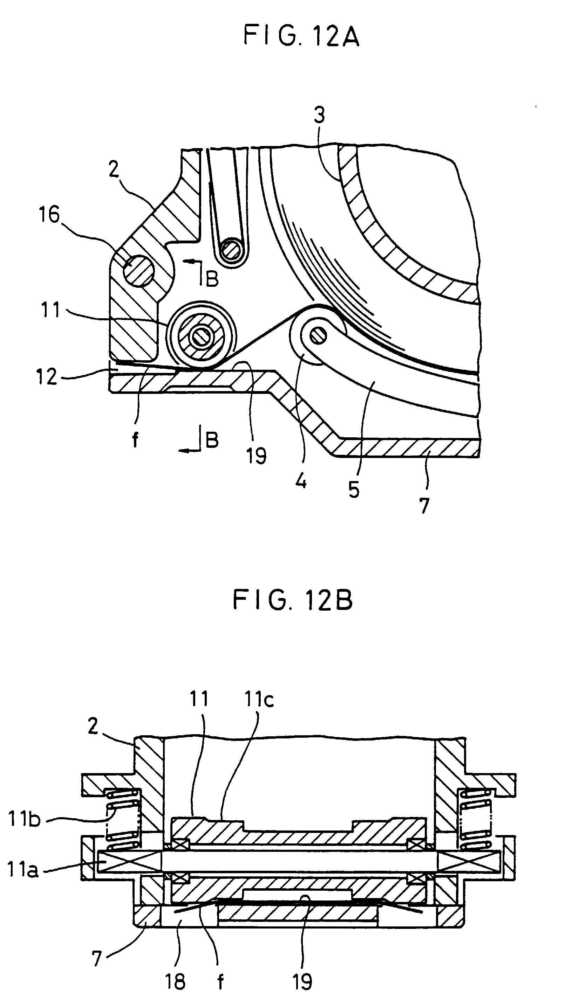

With the continuous film feed device 1 removed from the mounting base 21, the film leading end is held in position by lid 7 in the following manner: Figs. 12A and 12B show the state in which the continuous film feed device 1 is detached and the film leading end is pulled in to the area near the film outlet 12 of the case 2. By closing lid 7 in this state, though feed rollers 100 and mating rollers 11 disengage from each other, the film presser 19, which is a part of the lid 7, is now pressed against small-diameter portions 11c of the mating rollers 11, with the film sandwiched therebetween. Thus, by closing the lid 7, the leading end of the film is automatically pressed between presser 19 and rollers 11 and held in position in the case 2.

## Claims

1. A method of continuously feeding films (f) out of a case (2), comprising the steps of winding a plurality of films (f) one after another around a film core (3) rotatably supported in the case (2), and thereafter continuously feeding said films out of said case by unwinding the films one after the other from said film core (3),
**characterised in that** said films (f) are wound on said film core (3) with the end of the adjacent films (f) overlapped by putting the leading end of each film under the tail end of the preceding film wound immediately before said each film while said overlapped film ends are kept pressed toward the centre of said film core (3), and in that said films (f) are continuously fed out of said case (2) one after the other by applying a pulling force onto the leading film (f) while the overlapping film ends remain pressed.

2. The method of claim 1 including the step of applying said pulling force by means of a feed roller (10, 11) arranged so that the pressure on the overlapped ends of said pulled out film and said preceding film wound immediately before onto said core (3) is released, and said films are separated, when said tail end of said preceding film has reached a feed roller (10,11).

3. The method of claim 2 wherein said feed roller (10) is driven for applying a first pulling force to said film and is adapted to idle when a second pulling force higher than said first pulling force is applied to said film (f), and said driving of said feed roller (10) is stopped when said feed roller (10) becomes idling.

4. The method of claim 3 including the step of reactivating driving of said feed roller (10) after a predetermined interval.

5. A continuous film feeding device (1) comprising a case (2) formed with an outlet (12), a film core (3) rotatably supported in said case (2), and feeding means (10,11) for feeding said film (f) out of said case (2), said case (2) being adapted to receive a plurality of films (f) wound onto said core (3) one after the other,
**characterised in that** said case (2) has a lid (7) which can be opened, and includes a film pressure means (4,5,8) provided around said film core (3) and comprising rollers (4) for pressing against said film core (3) the films (f) wound around said film core (3) with the leading end of each film slid under the tail end of the preceding film, and in that said feeding means includes a feed roller (10) provided outside said case (2) near said outlet (12) and a mating roller (11) provided inside said case (2) and opposite to said feed roller (10), said feed roller (10) and mating roller (11) cooperating with each other to pull said films (f) one after the other out of said case (2).

6. The device (1) of claim 5 wherein said mating roller (11) has a shaft urged by an elastic member (11b) so as to be movable , wherein an opening (18) for receiving said feed roller (10) is formed in said case (2) near said mating roller (11), and wherein the inner surface of said lid (7) at a portion between said feed roller (10) and said mating roller (11) is formed as a presser (19) for pressing the films (f) fed therebetween.

7. The device of claim 5 or 6 wherein the distance between a roller (4) of said film pressure means and said feed roller (10) is shorter than said overlapped portion of said film (f).

## Patentansprüche

1. Verfahren zum kontinuierlichen Fördern von Filmen (f) aus einem Gehäuse (2) heraus, umfassend die Verfahrensschritte des Aufwickelns einer Vielzahl von Filmen (f) einen nach dem anderen um einen Filmkern (3), der drehbar im Gehäuse (2) gelagert ist, und das anschließende kontinuierliche Fördem der Filme aus dem Gehäuse durch Abwickeln der Filme einen nach dem anderen vom Filmkern (3), **dadurch gekennzeichnet**, daß die Filme (f) auf den Filmkem (3) mit den Enden der benachbarten Filme (f) überlappend aufgewickelt sind, indem man das vorlaufende Ende jedes Films unter das nachlaufende Ende des vorangegangenen Films, der unmittelbar vor dem Film aufgewickelt wurde, schiebt, während die sich überlappenden Filmenden gegen das Zentrum des Filmkerns (3) gepreßt gehalten werden, und daß die Filme (f) kontinuierlich aus dem Gehäuse (2) einer nach dem anderen herausgefördert werden, indem man eine Zugkraft auf das vorlaufende Ende (f) ausübt, während die sich überlappenden Filmenden gepreßt gehalten werden.

2. Verfahren nach Anspruch 1 enthaltend den Verfahrensschritt des Aufbringens der Zugkraft durch eine Förderrolle (10, 11), die so angeordnet ist, daß der Druck auf die sich überlappenden Enden des herausgezogenen Films und des vorangegangenen Films, der unmittelbar zuvor auf den Kern (3) gewickelt wurde, gelöst und die Filme getrennt werden, wenn das nachlaufende Ende des vorangegangenen Films eine Förderrolle (10, 11) erreicht hat.

3. Verfahren nach Anspruch 2, wobei die Förderrolle (10) zum Aufbringen einer ersten Zugkraft auf den Film angetrieben und so ausgebildet ist, daß sie freiläuft, wenn eine zweite Zugkraft, die höher als die erste Zugkraft ist, auf den Film (f) aufgebracht wird, und wobei das Antreiben der Förderrolle (10) beendet wird, wenn die Förderrolle (10) anfängt, freizulaufen.

4. Verfahren nach Anspruch 3, enthaltend den Verfahrensschritt des Reaktivierens des Antriebs der Förderrolle (10) nach einem vorbestimmten Zeitabstand.

5. Kontinuierliche Filmfördereinrichtung (1) mit einem Gehäuse (2), der mit einem Auslaß (12) versehen ist, einem Filmkern (3), der drehbar im Gehäuse (2) gelagert ist, und einer Fördereinrichtung (10, 11) zum Fördem des Films (f) aus dem Gehäuse (2) heraus, wobei das Gehäuse (2) so ausgebildet ist, daß es eine Vielzahl von Filmen (f) aufnehmen kann, die einer nach dem anderen auf den Kem (3) aufgewickelt sind, **dadurch gekennzeichnet**, daß das Gehäuse (2) einen zu öffnenden Deckel (7) aufweist und eine Filmdrückeinrichtung (4, 5, 8) enthält, die um den Filmkem (3) herum angeordnet ist und Rollen (4) zum Drücken der um den Filmkem (3) gewickelten Filme (f) gegen den Filmkern (3) enthält, wobei die Filme (f) so um den Filmkern (3) gewickelt sind, daß das vorlaufende Ende jedes Films unter das nachlaufende Ende des vorangegangenen Films gesteckt ist, und daß die Fördereinrichtung eine Förderrolle (10) enthält, die außerhalb des Gehäuses (2) in der Nähe des Auslasses (12) vorgesehen ist, und eine Gegenrolle (11) enthält, die innerhalb des Gehäuses (2) und der Förderrolle (10) gegenüberliegend angeordnet ist, wobei die Förderrolle (10) und die Gegenrolle (11) miteinander zusammenwirken, um die Filme (f) einen nach dem anderen aus dem Gehäuse (2) herauszuziehen.

6. Vorrichtung nach Anspruch 5, wobei die Gegenrolle (11) eine Welle aufweist, die durch ein elastisches Teil (11b) beaufschlagt ist, so daß sie bewegbar ist, wobe eine Öffnung (18) zum Aufnehmen der Förderrolle (10) im Gehäuse (2) in der Nähe der Gegenrolle (11) ausgebildet ist, und wobei die innere Oberfläche des Deckels (7) in einem Bereich zwischen der Förderrolle (10) und der Gegenrolle (11) als Druckteil (19) ausgebildet ist, um die dazwischen geförderten Filme (f) zu drücken.

7. Vorrichtung nach Anspruch 5 oder 6, wobei der Abstand zwischen einer Rolle (4) der Filmdrückeinrichtung und der Förderrolle (10) geringer ist als der überlappte Bereich des Films (f).

## Revendications

1. Un procédé pour délivrer des films (f) hors d'un boîtier (2) de manière continue comportant les étapes qui consistent à enrouler une pluralité de films (f), les uns après les autres autour d'un mandrin (3) support de film monté à rotation dans le boîtier (2), et ensuite à délivrer continuellement lesdits films hors dudit boîtier en déroulant les films les uns après les autres dudit mandrin (3) support de films; caractérisé en ce qu'on enroule lesdits films (f) sur ledit mandrin (3) support de films avec les extrémités des films adjacents (f) superposées en plaçant l'extrémité avant de chaque film sous l'extrémité arrière du film précédent enroulé immédiatement avant ledit film tandis que les extrémités superposées des films sont maintenues pressées en direction du centre dudit mandrin (3) support de films et en ce qu'on délivre continuellement lesdits films les uns après les autres hors dudit boîtier (2) en appliquant une force de traction au film avant (f) tout en maintenant sous pression les extrémités superposées des films.

2. Le procédé de la revendication 1 comportant l'étape qui consiste à appliquer ladite force de traction au moyen d'un rouleau d'alimentation (10) disposé de façon que la pression exercée sur les extrémités superposées dudit film extrait et dudit film précédent enroulé immédiatement avant lui sur ledit mandrin (3) est supprimée et lesdits films sont séparés lorsque ladite extrémité arrière dudit film précédent a atteint le rouleau d'alimentation (10, 11).

3. Le procédé de la revendication 2 dans lequel ledit rouleau d'alimentation (10) est entraîné pour appliquer une première force de traction audit film et est agencé de façon à tourner en roue libre lorsqu'une seconde force de traction supérieure à ladite première force de traction est appliquée audit film (f) et ledit entraînement dudit rouleau d'alimentation (10) est arrêté lorsque ledit rouleau d'alimentation (10) commence à tourner en roue libre.

4. Le procédé de la revendication 3 comportant l'étape qui consiste à remettre en route l'entraînement dudit rouleau d'alimentation (10) après un intervalle de temps prédéterminé.

5. Un dispositif (1) d'alimentation continue en films comprenant un boîtier (2) muni d'un orifice de sortie (12)un mandrin (3) support de films monté à rotation dans ledit boîtier (2) et des moyens d'alimentation (10, 11) pour délivrer ledit film (f) hors dudit boîtier (2), ledit boîtier (2) étant agencé de façon à pouvoir recevoir une pluralité de films (f) enroulés sur ledit mandrin (3) les uns après les autres,
caractérisé en ce que ledit boîtier (2) comporte un couvercle (7) qui peut être ouvert, et comporte des moyens (4, 5, 8) presseurs de films prévus autour dudit mandrin (3) support de films et comportant des rouleaux (4) pour presser contre ledit mandrin support de films les films (f) enroulés autour dudit mandrin (3) support de films avec l'extrémité avant de chaque film glissée sous l'extrémité arrière du film précédent, et en ce que lesdits moyens d'alimentation comportent un rouleau d'alimentation (10) prévu à l'extérieur dudit boîtier (2) au voisinage dudit orifice de sortie (12) et un rouleau d'appui (11) prévu à l'intérieur dudit boîtier (2) et faisant face audit rouleau d'alimentation (10), ledit rouleau d'alimentation (10) et ledit rouleau d'appui (11) coopérant entre eux pour tirer lesdits films (f) les uns après les autres hors dudit boîtier (2).

6. Le dispositif (1) de la revendication 5 dans lequel ledit rouleau d'appui (11) comporte un arbre sollicité par un organe élastique (11b) de façon à être mobile, dans lequel une ouverture (18) pour recevoir ledit rouleau d'alimentation (10) est formée dans ledit boîtier (2) au voisinage dudit rouleau d'appui et dans lequel la surface intérieure dudit couvercle (7) en un emplacement situé entre ledit rouleau d'alimentation (10) et ledit rouleau d'appui (11) est réalisée sous la forme d'un organe presseur (19) pour presser les films (f) délivrés entre eux.

7. Le dispositif (1) de la revendication 5 ou 6 dans lequel la distance entre un rouleau (4) desdits moyens presseurs de films et ledit rouleau d'alimentation (10) est plus courte que ladite partie superposée dudit film ((f).
